# EUROPEAN PATENT APPLICATION

(11) **EP 4 806 600 A1**
(43) Date of publication of application: **16.09.2026**
(21) Application number: 26162413.4
(22) Date of filing: 04.03.2026
(51) Int. Cl.: B25J 9/16, G05B 19/409

(54) **TERMINAL DEVICE**

(30) Priority: 10.03.2025 JP 2025037411
(71) Applicant: DAIHEN Corporation, Yodogawa-ku Osaka-shi Osaka 532-8512 (JP)
(72) Inventor: FUJISAWA, Sho, Osaka, 5328512 (JP)
(74) Representative: Manitz Finsterwald Patent- und Rechtsanwaltspartnerschaft mbB

(57) **Abstract**

To provide a terminal device capable of improving the visibility of a screen that displays a list of operation programs. Provided is a terminal device that teaches a motion of an industrial robot, the terminal device including: a display control unit 311 that displays, in a list, images corresponding to operation contents of each of a plurality of operation programs that define the motion of the industrial robot.

## Description

### Background

### Field

The present invention relates to a terminal device.

### Description of Related Art

Patent Publication JP-A-2003-241807 discloses a robot control device that displays, in a list, operation programs associated with a given operation program together with associated information. This robot control device can retrieve operation programs associated with a given operation program and store the same in associated program storage means in advance, display a list of the operation programs on the basis of the associated program storage means, and optionally select to display only a selected operation program.

### Summary

However, in the programming device of Patent Publication JP-A-2003-241807, the visibility of the screen that displays a list of operation programs is not sufficiently high.

Accordingly, an object of the present invention is to provide a terminal device capable of improving the visibility of a screen that displays a list of operation programs.

An aspect of the present invention provides a terminal device teaching a motion of an industrial robot, the terminal device including: a display control unit that displays, in a list, images corresponding to operation contents of each of a plurality of operation programs that define the motion of the industrial robot.

According to this aspect, a user can easily ascertain the operation contents of each of the plurality of operation programs from the images.

In the above aspect, the display control unit may display, in a list, identification information corresponding to each of the plurality of operation programs together with the images.

According to this aspect, the user can more easily identify the plurality of operation programs.

In the above aspect, the terminal device may further include a reception unit that receives a selection from a user for at least one of the plurality of operation programs, and the display control unit may further display a screen for executing and/or editing a target operation program that is the operation program selected by the user from among the plurality of operation programs.

According to this aspect, the terminal device can easily transition to the screen for executing and/or editing the operation program.

In the above aspect, the images may indicate a workpiece that serves as a work target for the industrial robot.

According to this aspect, the user can more easily ascertain the operation contents of the plurality of operation programs.

In the above aspect, the images may relate to a movie and/or a path indicating the motion of the industrial robot.

According to this aspect, the user can more easily ascertain the operation contents of the plurality of operation programs.

In the above aspect, the display control unit may further display a screen for executing and/or editing another operation program different from the plurality of operation programs, and the terminal device may further include an image setting unit that, upon receiving a specified operation from a user, displays a screen for setting an image corresponding to operation contents of the other operation program.

According to this aspect, the user can easily set the image of the other operation program.

In the above aspect, after setting the image corresponding to the operation contents of the other operation program, the display control unit may add the image to the list for display.

According to this aspect, the operation program created by the user can be added to the list.

In the above aspect, the terminal device may further include an association unit that associates, for each of the plurality of operation programs, information regarding a result of a work based on the operation program with the operation program.

According to this aspect, the user can ascertain, in addition to the operation contents of the operation programs, the information regarding the results.

According to the present invention, it is possible to provide a terminal device capable of improving the visibility of a screen that displays a list of operation programs.

### Brief Description of Drawings

FIG. 1 is a diagram illustrating the configuration of a robot system including a teaching device according to an embodiment;
FIG. 2 is a diagram illustrating an example of a screen displayed on a display unit; FIG. 3 is a diagram illustrating an example of the screen displayed on the display unit;
FIG. 4 is a diagram illustrating an example of the screen displayed on the display unit;
FIG. 5 is a diagram illustrating an example of the screen displayed on the display unit;
FIG. 6 is a diagram illustrating an example of the screen displayed on the display unit; and
FIG. 7 is a flowchart illustrating the operation of the teaching device according to the embodiment.

### Detailed Description

A preferred embodiment of the present invention will be described with reference to the accompanying drawings. Note that elements denoted by the same reference numerals in the figures have the same or similar configurations. Furthermore, because the drawings are schematic, the dimensions and proportions of the respective elements may differ from actual dimensions and proportions.

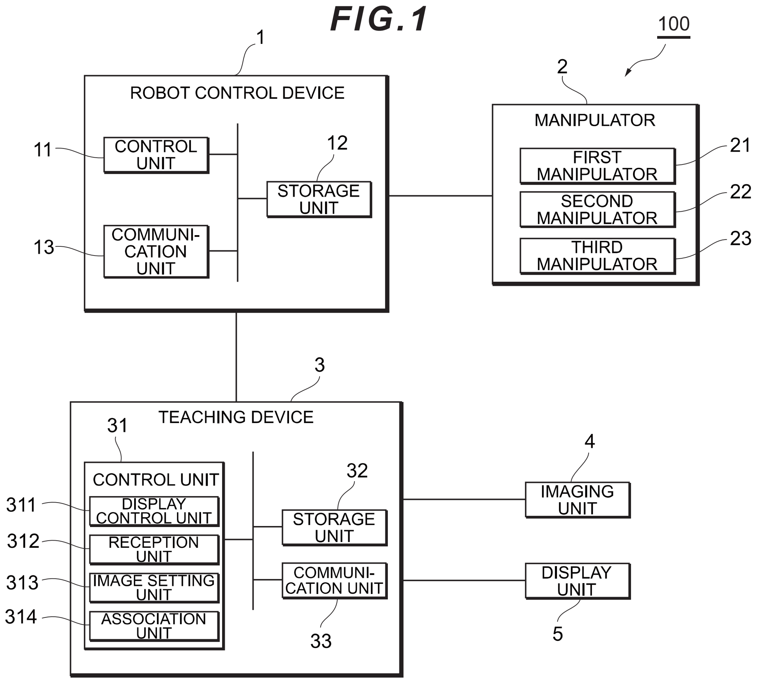

FIG. 1 is a diagram illustrating the configuration of a robot system 100 including a teaching device 3 according to the embodiment. The robot system 100 includes, for example, a robot control device 1, a manipulator 2, the teaching device 3, an imaging unit 4, and a display unit 5. Note that the imaging unit 4 and the display unit 5 may be incorporated into the teaching device 3. The manipulator 2 may be any one of a first manipulator 21, a second manipulator 22, or a third manipulator 23, each having different operation contents. In the following description, the first manipulator 21, the second manipulator 22, and the third manipulator 23 may be simply referred to as a "manipulator 2" when they are not particularly distinguished or when they are collectively referred to. The manipulator 2 is an example of an industrial robot. The teaching device 3 is an example of a terminal device.

The robot control device 1 and the teaching device 3, the robot control device 1 and the manipulator 2, and the teaching device 3 and the imaging unit 4 and the display unit 5 are connected via a cable, wireless communication, or the like.

The manipulator 2 is a welding robot that performs arc welding on a workpiece (base material), which is a work target, in accordance with welding execution conditions set by the robot control device 1. The manipulator 2 has, for example, an articulated arm mounted on a base member fixed to a factory floor or the like, and a welding torch (work tool) connected to the tip of the articulated arm as one of the work tools.

The manipulator 2 is also a cooperative robot designed to cooperate with humans and can operate in response to external forces. An operator can also directly manipulate the manipulator 2 by directly applying an external force to the manipulator 2 by hand and moving the manipulator 2 in accordance with the external force. Note that the industrial robot of the present invention includes both robots that require safety fences and are not designed to cooperate with humans, and cooperative robots that are designed to cooperate with humans.

The robot control device 1 is a control unit that controls the motion of the manipulator 2 in accordance with welding execution conditions set in advance. The welding execution conditions include, for example, data items such as welding conditions, a welding start position, a welding end position, a welding distance, and the position and posture of the welding torch. The welding conditions include, for example, data items such as a welding current, a welding voltage, a welding speed, a wire feed speed, and a workpiece thickness.

The robot control device 1 includes, for example, a control unit 11, a storage unit 12, and a communication unit 13. The control unit 11 is a processor and controls the manipulator 2 by executing an operation program or the like stored in the storage unit 12.

The storage unit 12 is a computer-readable recording medium and stores a program for implementing various functions of the robot control device 1, various data used by the program, and the like. The communication unit 13 is a communication interface and controls communication with the manipulator 2 and the teaching device 3, which are connected via a network or the like.

Note that the robot control device 1 may further include a welding power supply unit. For example, the welding power supply unit supplies a welding current, a welding voltage, and the like to the manipulator 2 in accordance with specified welding execution conditions to generate an arc between the tip of a welding wire and a workpiece. Note that the welding power supply unit may be provided separately from the robot control device 1.

The teaching device 3 is a device that executes processing such as when an operator (user) teaches the motion of the manipulator 2 and is, for example, a tablet-type teach pendant. The teaching device 3 includes, for example, a control unit 31, a storage unit 32, and a communication unit 33.

The control unit 31 is a processor and controls each unit of the teaching device 3 by executing a program stored in the storage unit 32. The functions of the control unit 31 will be described later.

The storage unit 32 is a computer-readable recording medium and stores a program for implementing various functions of the teaching device 3, various data used by the program, and the like. The communication unit 33 is a communication interface and controls communication with the robot control device 1, the imaging unit 4, and the display unit 5, which are connected via a network.

The imaging unit 4 is, for example, a 3D camera equipped with a distance measurement sensor and also has a function as a 2D camera. The imaging unit 4 is preferably arranged at a position where at least a work space including a workpiece can be imaged. Note that the imaging unit 4 may be incorporated into the teaching device 3.

The distance measurement sensor is a sensor capable of measuring the distance to an object. The distance measurement sensor can be, for example, a LiDAR (Light Detection and Ranging) sensor, a millimeter-wave sensor, an ultrasonic sensor, or the like.

Here, the distance measurement sensor is not necessarily provided in the imaging unit 4. The distance measurement sensor may be provided separately from the imaging unit 4, or it may be omitted. When the distance measurement sensor is omitted, it is preferable to calculate three-dimensional coordinate data corresponding to an object on the basis of a plurality of images of the object captured from a plurality of different positions. In this case, a known three-dimensional measurement method using a stereo method can be employed.

The display unit 5 is, for example, a display device having a touch panel, and displays (2D and 3D) images of a subject captured by the imaging unit 4, while receiving the input of manipulation instructions and the like from the operator. Note that the display unit 5 may be provided in the teaching device 3.

As illustrated in FIG. 1, the control unit 31 of the teaching device 3 includes, for example, a display control unit 311, a reception unit 312, an image setting unit 313, and an association unit 314 as functional configurations.

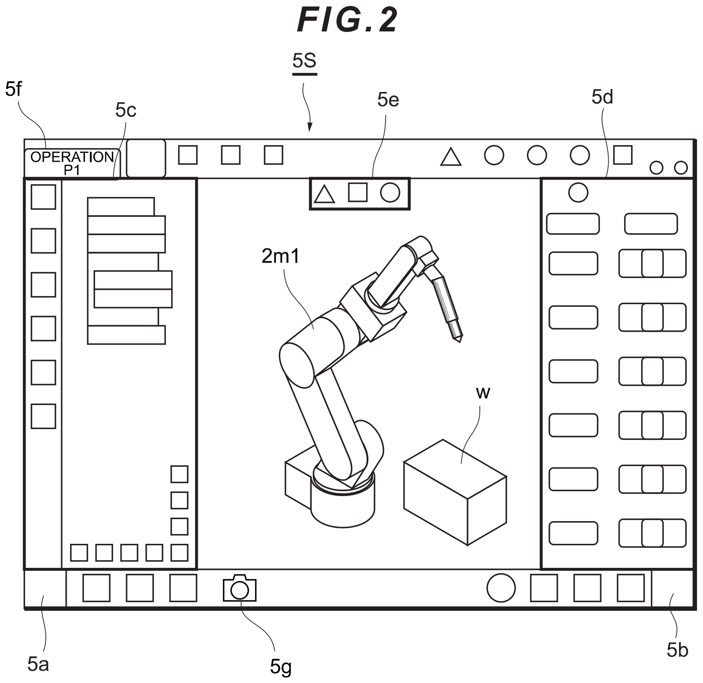

Hereinafter, functions that can be implemented on the basis of these configurations will be described with reference to FIGS. 2 to 7. Note that FIGS. 2 to 6 illustrate an example of a series of screen transitions.

FIG. 2 is a diagram illustrating an example of a screen 5S displayed by the display control unit 311. The screen 5S illustrated in FIG. 2 is an example of a screen (hereinafter referred to as an "execution editing screen") on which the operator can execute and/or edit an operation program.

On the screen 5S in FIG. 2, a virtual model 2m1 of the first manipulator 21 is displayed. The display control unit 311 may display the virtual model of the first manipulator 21 in a manner synchronized with the real first manipulator 21, or it may display the virtual model in a manner not synchronized with the real first manipulator 21. Furthermore, the virtual model may be an image, a drawing, a real image, or the like.

On the screen 5S, a workpiece w serving as a work target for the first manipulator 21, a program area 5c corresponding to a program screen, an operation panel area 5d corresponding to an operation panel screen, an icon area 5e, an operation program list display button 5f, and the like are further displayed.

The display and non-display of the program area 5c are switched by turning on and off a display switch button 5a at the bottom left end of the screen 5S. The display and non-display of the operation panel area 5d are switched by turning on and off a display switch button 5b at the bottom right end of the screen 5S.

The program area 5c is an area for executing so-called visual programming in which programming is performed by arranging blocks that define each command of an operation program in an operational sequence. The operation program includes, for example, a group of commands such as movement commands and welding commands.

The operation panel area 5d is an area for operating the position and posture of the virtual model 2m1. Specifically, in the operation panel area 5d, the X, Y, and Z coordinates of the robot coordinate system, as well as the roll angle R, pitch angle P, and yaw angle Y can be set for each axis of the first manipulator 21. The position and posture of the virtual model 2m1 change in accordance with the values set in the operation panel area 5d.

The icon area 5e is an area for displaying icons for switching the display state of the execution editing screen. The icons provided in the icon area 5e include, for example, an icon for switching between the display and non-display of a welding line, an icon for switching between the display and non-display of the virtual model 2m1, an icon for switching between 3D and 2D displays, and the like.

The operation program list display button 5f is a button that, when pressed by the operator, enables a transition to a screen for displaying a list of a plurality of operation programs (hereinafter simply referred to as an "operation program list"). Furthermore, on the operation program list display button 5f, the name of an operation program currently displayed on the execution editing screen is shown. In this example, the name of the operation program is displayed as "operation P1."

An imaging start button 5g is a button that, when pressed by the operator, enables the imaging unit 4 of the teaching device 3 to function. With this button, the operator can transition to a screen for capturing an image corresponding to the operation contents of the operation program currently displayed on the execution editing screen.

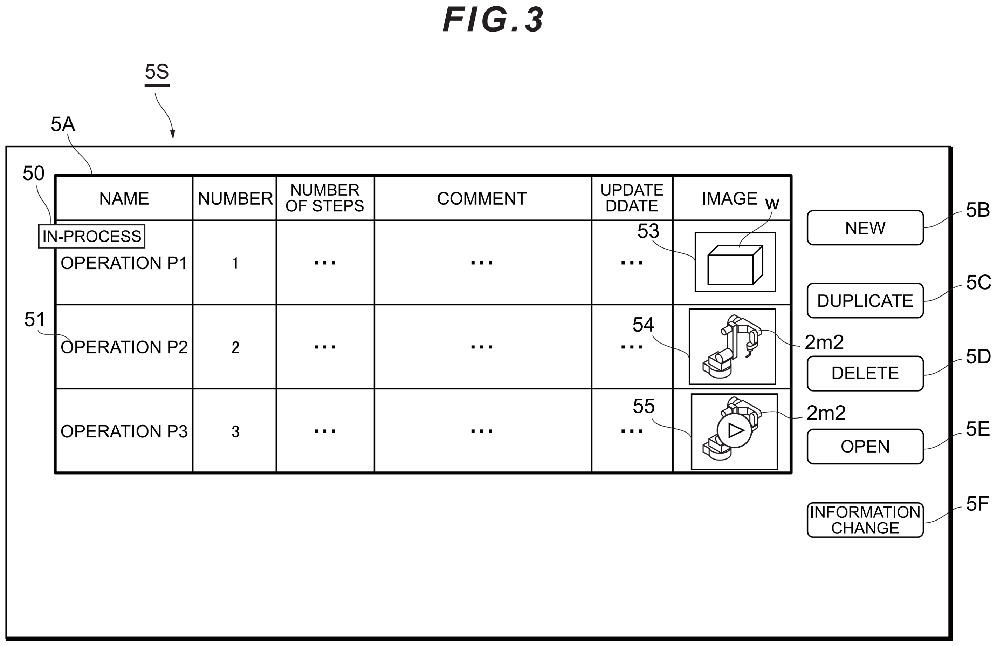

With reference to FIG. 3, an example in which the display control unit 311 displays, in a list, images corresponding to the operation contents of each of a plurality of operation programs that define the motion of the manipulator 2, and an example in which identification information corresponding to each of the plurality of operation programs is displayed in a list together with the images, will be described. FIG. 3 is a diagram illustrating an example of the screen 5S displayed when the reception unit 312 receives a press of the operation program list display button 5f on the screen 5S illustrated in FIG. 2. The screen 5S in FIG. 3 displays an operation program list 5A, a new button 5B, a duplicate button 5C, a delete button 5D, an open button 5E, and an information change button 5F.

The operation program list 5A displays, in a list, images corresponding to the operation contents of each of a plurality of operation programs that define the motion of the manipulator 2. In one embodiment, the operation program list 5A displays, for each operation program, the name of the operation program (an example of identification information), a number assigned to the operation program (another example of the identification information), the number of steps of the operation program, a comment for the operation program that can be set by the operator, an update date at which the information of the operation program was last changed by the operator, and an image corresponding to the operation contents of the operation program.

In the operation program list 5A, an in-process icon 50 is displayed in association with the operation program which was most recently displayed on the execution editing screen. Because the execution editing screen of the operation program named "operation P1" was opened on the screen 5S in FIG. 2 immediately before transitioning to the screen 5S in FIG. 3, the in-process icon 50 on the screen 5S in FIG. 3 is displayed in association with the operation program.

In the operation program list 5A, a frame 51 is displayed in association with an operation program tentatively selected by the operator. The operator can move the frame 51 up and down on the operation program list 5A by operating the teaching device 3. The screen 5S in FIG. 3 illustrates an example in which an operation program named "operation P2" is tentatively selected.

The operation program list 5A displays images (images 53, 54, and 55) corresponding to the operation contents of each of a plurality of operation programs.

The image 53 shows the workpiece w. This indicates that the first manipulator 21 performs an operation on the workpiece w when executing the operation program named "operation P1". The image 53 is an example of an image showing a workpiece that serves as a work target for the manipulator 2.

The image 54 shows a virtual model 2m2 of the second manipulator 22. This indicates that the operation program named "operation P2" is executed by the second manipulator 22 represented by the virtual model 2m2.

The image 55 shows a thumbnail of a movie indicating the motion of the virtual model 2m2 of the second manipulator 22. This indicates that the operator can play the movie on the teaching device 3 by pressing the image 55. Note that the thumbnail is an example of an image showing a movie. The image 55 is an example of an image regarding a movie showing the motion of the manipulator 2.

Furthermore, although not illustrated, the image may be an image regarding a path indicating the motion of the manipulator 2 (for example, a path along which the welding tool moves from a welding start position to a welding end position).

The new button 5B is a button for creating a new operation program. The duplicate button 5C is a button for duplicating the operation program (in the example of FIG. 3, the operation program named "operation P2") tentatively selected in the operation program list 5A. The delete button 5D is a button for deleting the operation program tentatively selected in the operation program list 5A. The open button 5E is a button for transitioning to the execution editing screen of the operation program tentatively selected in the operation program list 5A. The information change button 5F is a button for transitioning to the screen for changing various information (e.g., the name, number, comment, and the like) of the operation program tentatively selected in the operation program list 5A.

Here, as an example, it is assumed that the operator displays, via the operation program list 5A, the execution editing screen of the operation program for the second manipulator 22. In one embodiment, the operator can find the image 54, which displays the virtual model 2m2 of the second manipulator 22, by referring to the images (the images 53, 54, and 55) according to the operation program list 5A. As a result, the operator can easily identify the operation program named "operation P2," which corresponds to the operation program of the second manipulator 22, from the operation program list 5A.

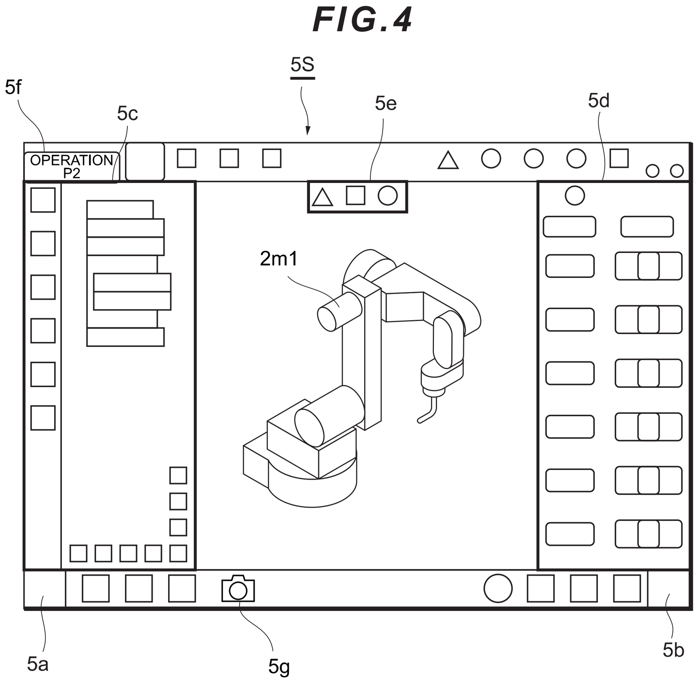

With reference to FIG. 4, an example will be described in which, when the reception unit 312 receives a selection from the operator for at least one of a plurality of operation programs, the display control unit 311 displays a screen for executing and/or editing a target operation program that corresponds to the operation program selected by the operator among the plurality of operation programs. FIG. 4 is a diagram illustrating the screen 5S when the open button 5E is pressed while the operation program named "operation P2" is tentatively selected in the operation program list 5A illustrated in FIG. 3. The virtual model 2m2 is displayed on the screen 5S in FIG. 4. Furthermore, "operation P2" is shown on the operation program list display button 5f. Here, the reception of the pressing of the open button 5E by the reception unit 312 represents an example in which the reception unit 312 receives a selection from the operator for at least one of a plurality of operation programs. Furthermore, the operation program named "operation P2" is an example of a target operation program. Furthermore, the display of the execution editing screen of the operation program named "operation P2" represents an example of displaying a screen for executing and/or editing a target operation program.

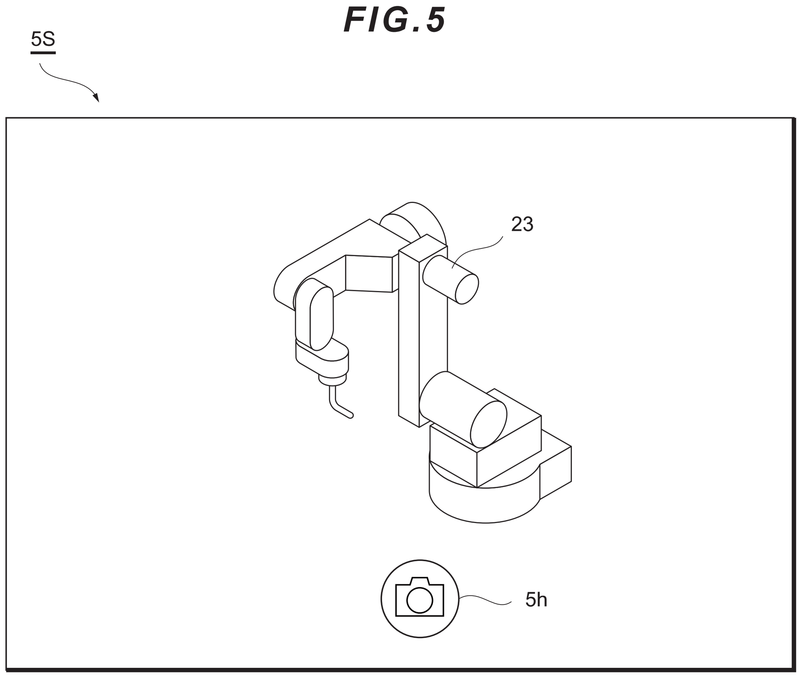

With reference to FIG. 5, an example will be described in which the display control unit 311 displays a screen for executing and/or editing another operation program different from a plurality of operation programs, and in which, upon receiving a specified operation from the operator, the image setting unit 313 displays a screen for setting an image corresponding to the operation contents of the other operation program. FIG. 5 is a view illustrating the screen 5S when the operator presses the imaging start button 5g on the screen 5S in FIG. 4. The real third manipulator 23 is displayed on the screen 5S in FIG. 5. When the operator presses an imaging button 5h in this state, the imaging unit 4 of the teaching device 3 captures an image of the third manipulator 23. Here, the pressing of the imaging start button 5g represents an example of a specified operation received from the operator. The screen 5S in FIG. 5 represents an example of a screen for setting an image corresponding to the operation contents of another operation program.

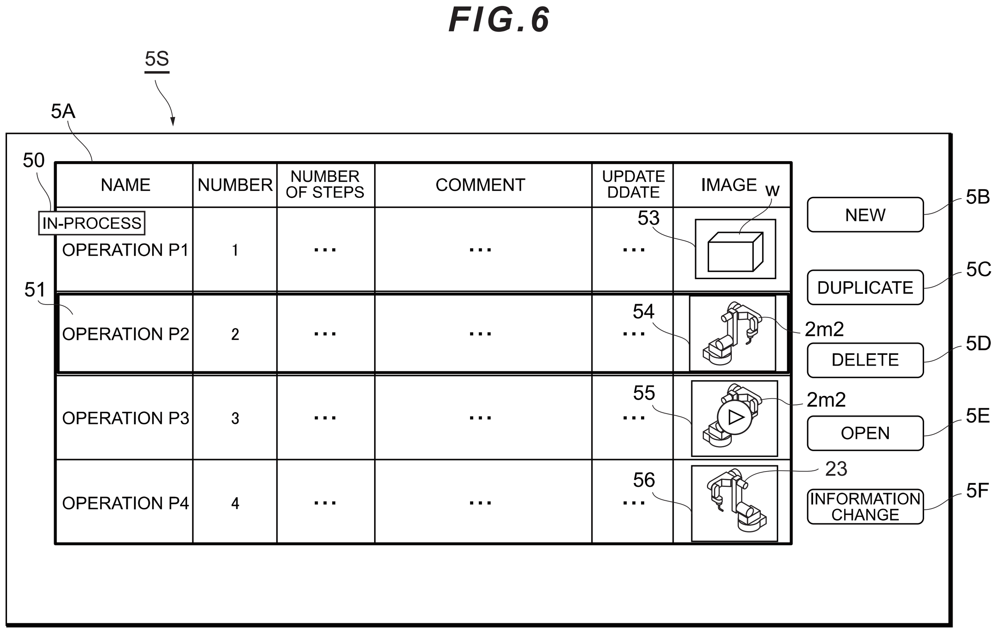

With reference to FIG. 6, an example will be described in which, after setting an image corresponding to the operation contents of another operation program, the display control unit 311 adds the image to a list for display. FIG. 6 is a view illustrating the screen 5S after the capturing of an image of the third manipulator 23 is completed in the screen 5S illustrated in FIG. 5. In comparison with the operation program list 5A illustrated in FIG. 3, the operation program named "operation P4," which is associated with the image 56 of the third manipulator 23, has been added to the operation program list 5A. Here, the operation program named "operation P4" represents an example of another operation program. In one embodiment, the operator can display the execution editing screen of the operation program by pressing the open button 5E after moving the frame 51 to the operation program named "operation P4."

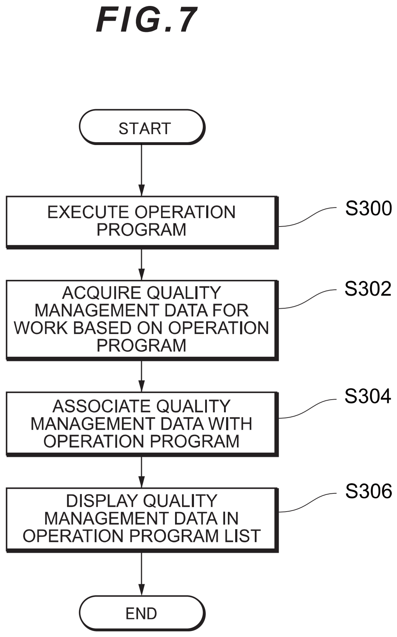

With reference to FIG. 7, an example will be described in which the association unit 314 associates, for each of a plurality of operation programs, information regarding the result of a work based on the operation program with the operation program. The information regarding the result of the work can include, for example, quality management data for the work based on the operation program. The quality management data can include, for example, information regarding yield and work accuracy.

FIG. 7 is a flowchart illustrating another example of the operation of the association unit 314. First, the teaching device 3 causes the manipulator 2 to execute an operation program (S300). Next, the teaching device 3 acquires quality management data for the work based on the operation program (S302). Then, the association unit 314 associates the quality management data acquired in step S302 with the operation program related to step S300 (S304). The association of the quality management data with the operation program may include storing the associated information in the storage unit 32 or storing the associated information in a server device that is configured to be communicable with the teaching device 3. Next, the display control unit 311 further displays, for each of a plurality of operation programs, the quality management data associated with the operation program in the operation program list 5A (S306).

Note that the present invention is not limited to the above embodiment and can be implemented in various other forms without departing from the gist of the present invention. Therefore, the above embodiment is provided merely as an example in all respects and should not be construed as limiting.

The images of the above embodiment can include various images indicating the operation contents of operation programs. Examples of images indicating the operation contents include an image of a workpiece before a work is performed by the manipulator 2, an image of a workpiece after a work is performed by the manipulator 2, an image showing a series of states of a workpiece from before to after a work is performed by the manipulator 2, and an image showing beads formed on a workpiece. The images indicating the operation contents may also include images of real objects (such as the manipulator 2 and the workpiece w), images of virtual models corresponding to the real objects (such as the virtual model 2m1 of the first manipulator 21 and a virtual model of the workpiece w), and images in which the above images are combined in an augmented reality manner.

Although the operation program list 5A in the above embodiment includes, in addition to the images indicating the operation contents of the operation programs, information such as the names, comments, and the like of the operation programs, these are not essential. Displaying, in a list, images corresponding to the operation contents of a plurality of operation programs includes displaying images corresponding to the plurality of operation programs while excluding other information (for example, the names, numbers, number of steps, comments, and update dates) regarding the operation programs.

In the above embodiment, the screen 5S illustrated in FIG. 5 has been described as an example of a screen for setting an image corresponding to the operation contents of an operation program. However, the present invention is not limited thereto. The screen for setting an image corresponding to the operation contents of an operation program may, for example, be a screen that enables an image stored in the storage unit 32 to be uploaded.

In the above embodiment, although the teaching device 3 has been described as a terminal device, the terminal device may be a device exclusively for performing teaching on the manipulator 2, such as the teaching device 3, or may be, for example, a general-purpose communication terminal, such as a tablet, a personal computer, or a smartphone. When the terminal device is a general-purpose communication terminal, various functions of the teaching device 3 described in the above embodiment may be implemented by a specific program installed on the terminal device.

In the above embodiment, a plurality of images may be displayed in association with each other for each operation program in the operation program list 5A. In this case, one of the plurality of images may be displayed for each operation program, and the displayed image may be switched on the basis of the operator's operation. For example, when first, second, and third images are associated with a certain operation program, the operator can switch the currently displayed image among the first, second, and third images by pressing the image.

Furthermore, when a plurality of images are displayed in association with each other for a certain operation program in the operation program list 5A, the plurality of images can include both an image corresponding to the operation contents of the operation program before the update and an image corresponding to the operation contents of the operation program after the update.

In the above embodiment, when the operator presses an image in the operation program list 5A, the image or various information regarding the operation program associated with the image may be displayed. In one example, when an image in the operation program list 5A is pressed, the display control unit 311 may display the image in an enlarged manner. In another example, when an image corresponding to a movie in the operation program list 5A is pressed, the display control unit 311 may display a part of the movie (for example, a movie corresponding to a period in which an arc is generated during the entire motion of the manipulator 2). In another example, when an image in the operation program list 5A is pressed, the display control unit 311 may display a preview of the commands included in the operation program associated with the image.

Furthermore, in the above-described embodiment, the manipulator 2 has been described as a welding robot. However, the present invention is not limited thereto. The present invention can also be applied to industrial robots including handling robots for performing picking or the like, and cutting and polishing robots for performing cutting and polishing.

## Claims

1. A terminal device (3) teaching a motion of an industrial robot (2), the terminal device (3) comprising:
a display control unit (311) that displays, in a list, images corresponding to operation contents of each of a plurality of operation programs that define the motion of the industrial robot (2).

2. The terminal device (3) according to claim 1, wherein the display control unit (311) displays, in a list, identification information corresponding to each of the plurality of operation programs together with the images.

3. The terminal device (3) according to claim 1, further comprising: a reception unit (312) that receives a selection from a user for at least one of the plurality of operation programs, wherein
the display control unit (311) further displays a screen for executing and/or editing a target operation program that is the operation program selected by the user from among the plurality of operation programs.

4. The terminal device (3) according to claim 1, wherein the images indicate a workpiece that serves as a work target for the industrial robot (2).

5. The terminal device (3) according to claim 1, wherein the images relate to a movie and/or a path indicating the motion of the industrial robot (2).

6. The terminal device (3) according to claim 1, wherein the display control unit (311) further displays a screen for executing and/or editing another operation program different from the plurality of operation programs,
the terminal device (3) further comprising an image setting unit (313) that, upon receiving a specified operation from a user, displays a screen for setting an image corresponding to operation contents of the other operation program.

7. The terminal device (3) according to claim 6, wherein, after setting the image corresponding to the operation contents of the other operation program, the display control unit (311) adds the image to the list for display.

8. The terminal device (3) according to claim 1, further comprising: an association unit (314) that associates, for each of the plurality of operation programs, information regarding a result of a work based on the operation program with the operation program.
